# NEUE EUROPÄISCHE PATENTSCHRIFT

(11) **EP 0 722 865 B2**
(45) Veröffentlichungstag und Bekanntmachung des Hinweises auf die Entscheidung über den Einspruch: **15.11.2000**
(45) Hinweis auf die Patenterteilung: 27.08.1997
(21) Anmeldenummer: 95100773.1
(22) Anmeldetag: 20.01.1995
(51) Int. Cl.: B60R 25/02

(54) **Diebstahlschutzvorrichtung für ein Kraftfahrzeug**
Anti-theft device for a vehicle
Dispositif antivol pour un véhicule

(43) Veröffentlichungstag der Anmeldung: 24.07.1996
(73) Patentinhaber: SIEMENS AKTIENGESELLSCHAFT, 80333 München (DE)
(72) Erfinder: Schweiger, Jürgen, D-93049 Regensburg (DE); Brunner, Erich, D-94345 Aholfing (DE)

(56) Entgegenhaltungen:
- EP-A- 0 085 383
- EP-A- 0 239 987
- DE-A- 4 314 931
- DE-C- 3 306 863
- DE-C- 3 318 359
- DE-C- 3 739 172
- US-A- 4 918 955
- PATENT ABSTRACTS OF JAPAN vol. 15 no. 329 (M-1149) ,21.August 1991 & JP-A-03 125651 (OMRON CORP) 29.Mai 1991,

## Beschreibung

Die Erfindung betrifft eine Diebstahlschutzvorrichtung für ein Kraftfahrzeug, insbesondere eine Wegfahrsperre.

Eine bekannte Diebstahlschutzvorrichtung (US 4,918,955) weist einen tragbaren Transponder auf einem Zündschlüssel auf. Sobald der Zündschlüssel in das Zündschloß gesteckt und verdreht wird, wird auf Anforderung ein Codesignal ausgesendet. Dieses Codesignal wird von einem Steuergerät im Kraftfahrzeug empfangen, mit einem gespeicherten Sollcodesignal verglichen und bei Übereinstimmung mit einem Freigabesignal erzeugt. Durch das Freigabesignal kann der Motor gestartet werden.

Solche Diebstahlschutzvorrichtungen oder auch Wegfahrsperren haben nur Einfluß auf das Starten des Motors. So kann beispielsweise die Motorsteuerung nicht freigegeben, die Kraftstoffzufuhr des Motors über ein Ventil gesperrt oder der Zündstromkreis durch einen Schalter unterbrochen werden.

Das Problem der Erfindung ist es, eine verbesserte Diebstahlschutzvorrichtung zu schaffen.

Dieses Problem wird durch die Merkmale des Patentanspruchs 1 gelöst. Die erfindungsgemäße Diebstahlschutzvorrichtung wirkt auf die Lenkung der Räder derart ein, daß erst nach Empfang eines Freigabesignals ein Einschlagen der Räder ermöglicht wird. Diese Lösung hat den Vorteil, daß eine herkömmliche, mechanische Lenkradsperre entfallen kann.

Vorteilhafte Ausgestaltungen der Erfindung sind in den Unteransprüchen gekennzeichnet. So ist es vorteilhaft, wenn auf eine herkömmliche hydraulische oder elektrische Servolenkung durch das Freigabesignal eingewirkt wird.

Ausführungsbeispiele der Erfindung werden anhand der schematischen Zeichnungen näher erläutert. Es zeigen:
- Figur 1:: ein Blockdiagramm der erfindungsgemäßen Diebstahlschutzvorrichtung,
- Figuren 2, 3a und 3b:: Blockschaltbilder des Hydraulikkreises der Diebstahlschutzvorrichtung, und
- Figur 4:: ein Blockdiagramm einer elektromotorischen Servolenkung, auf die die Diebstahlschutzvorrichtung einwirkt.

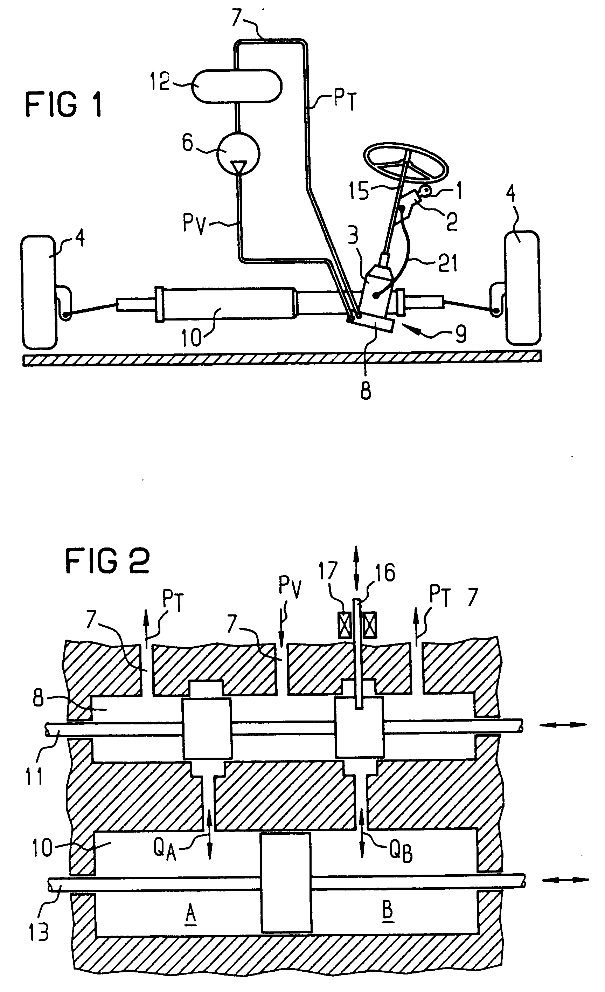

Eine erfindungsgemäße Diebstahlschutzvorrichtung weist einen Codegeber, 1 (Figur 1) auf, der beispielsweise auf einen Tür- oder Zündschlüssel integriert sein kann. Bei Betätigen einer Taste des Codegebers 1, bei Annähern des Codegebers 1 an das Kraftfahrzeug oder bei Einstecken und Verdrehen des Zündschlüssels im Zündschloß 2 wird ein Codesignal ausgesendet.

Das Codesignal wird von einer Sende-/Empfangseinheit im Kraftfahrzeug empfangen. In einer Recheneinheit wird das Codesignal mit einem gespeicherten Soll-Codesignal verglichen. Wenn das Codesignal mit dem Soll-Codesignal übereinstimmt, wird von der Recheneinheit ein Steuersignal, d.h. ein Freigabesignal erzeugt. Dieses Freigabesignal wird an ein Sicherheitsaggregat im Kraftfahrzeug gesendet.

Die Sende-/Empfangseinheit und die Recheneinheit befinden sich in einem separatem Steuergerät, das mit dem Sicherheitsaggregat über einen Bus verbunden ist, oder - wie in Figur 1 dargestellt - sie sind in einem das Sicherheitsaggregat steuernde Steuergerät 3 angeordnet.

Bei der vorliegenden Erfindung ist die Lenkeinrichtung ein solches Sicherheitsaggregat. Ein Benutzer des Kraftfahrzeugs kann die Fahrzeugräder 4 erst dann einschlagen, wenn das Freigabesignal von der Lenkeinrichtung empfangen wurde.

Durch die Servolenkung wird der Fahrer beim Lenken unterstützt, damit nur ein geringer Kraftaufwand zum Drehen des Lenkrades notwendig ist.

In der Figur 1 ist eine hydraulische Servolenkung dargestellt (siehe auch Figur 2). Dabei läßt eine Hydraulikpumpe 6 die Hydraulikflüssigkeit (im folgenden als Öl bezeichnet) in einem Hydraulikkreis 7 unter dem Druck P_{V} strömen. In einem Servoventil 8 des Lenkgetriebes 9 trifft der Ölstrom auf zwei Ventile, die beim Lenkeinschlag betätigt werden, um den doppelt wirkenden Stellzylinder 10 mit dem unter Druck P_{V} stehenden Öl zu versorgen.

Dabei stellt sich der Steuerkolben 11 so ein, daß Öl vermehrt zum Stellzylinder 10 gelangen kann, während zugleich die Rücklaufleitung zum Vorratsbehälter 12 zunehmend öffnet (Druck P_{T}). Dadurch staut sich das Öl in einer Kammer des Stellzylinders 10 und Druck wird auf den Stellkolben 13 ausgeübt, so daß sich der Stellkolben 13 bewegen und den Fahrer wie gewünscht bei der Lenkung unterstützen kann.

Betätigt werden die Ventile dabei mittels eines Drehstabes im Lenkgetriebe 9 in Abhängigkeit der jeweiligen Lenkkräfte. In Mittelstellung, also bei kräftefreier Geraderausfahrt verharren beide Ventilschieber in einer Mittelstellung.

Das Servoventil 8 und der Stellzylinder sind in der Figur 2 in stark vereinfachter, anschaulicher Form dargestellt. Die Bewegung des Steuerkolbens 11 infolge eines Lenkradeinschlages zwingt den Stellkolben 13 zu einer Bewegung, wodurch die Räder 4 gelenkt werden. Über eine Leitung wird Öl unter dem Druck P_{V} zugeführt. Der Rückfluß des Öls zum Vorratsbehälter 12 geschieht über eine oder mehrere Leitungen, in denen der Druck P_{T} herrscht. Somit wird mit Hilfe des Hydrauliksystems der Kraftaufwand beim Lenken reduziert.

Da solche Hydrauliksysteme hinreichend bekannt sind, werden sie hier nicht näher erläutert.

Bei der erfindungsgemäßen Diebstahlschutzvorrichtung wirkt das Freigabesignal auf die Servolenkung ein, so daß das Drehen des Lenkrades ermöglicht wird.

Bevor das Freigabesignal empfangen wird, muß dafür gesorgt werden daß die Lenkung nicht oder nur ganz schwer zu betätigen ist. Hierzu gibt es bei hydraulischen Servolenkungen verschiedene Lösungsmöglichkeiten. Einerseits kann der Steuerkolben 11 und andererseits kann der Stellzylinder 10 fixiert werden. Es kann aber auch der Hydraulikkreis 7 unterbrochen werden. Weitere Möglichkeiten bestehen darin, die Lenksäule 15 wie mit einer Bremse festzuhalten.

Beispielsweise kann die Servolenkung als Verriegelungseinrichtung einen Verriegelungsbolzen 16 aufweisen, der den Steuerkolben 11 fixiert, in dem er in einer Öffnung des Steuerkolbens 11 einrastet. Sobald das Freigabesignal empfangen wird, wird der Verriegelungsbolzen 16 hydraulisch, elektromotorisch, magnetisch oder pneumatisch gesteuert und aus der Vertiefung des Steuerkolbens 11 herausbewegt (in der Figur sind Spulen 17 dargestellt, über die der Verriegelungsbolzen 16 elektromechanisch bewegt wird). Sobald der Veriegelungsbolzen 16 zurückgefahren ist, kann der Steuerkolben 11 frei bewegt werden, wodurch der Stellkolben 13 die Räder 4 einschlägt.

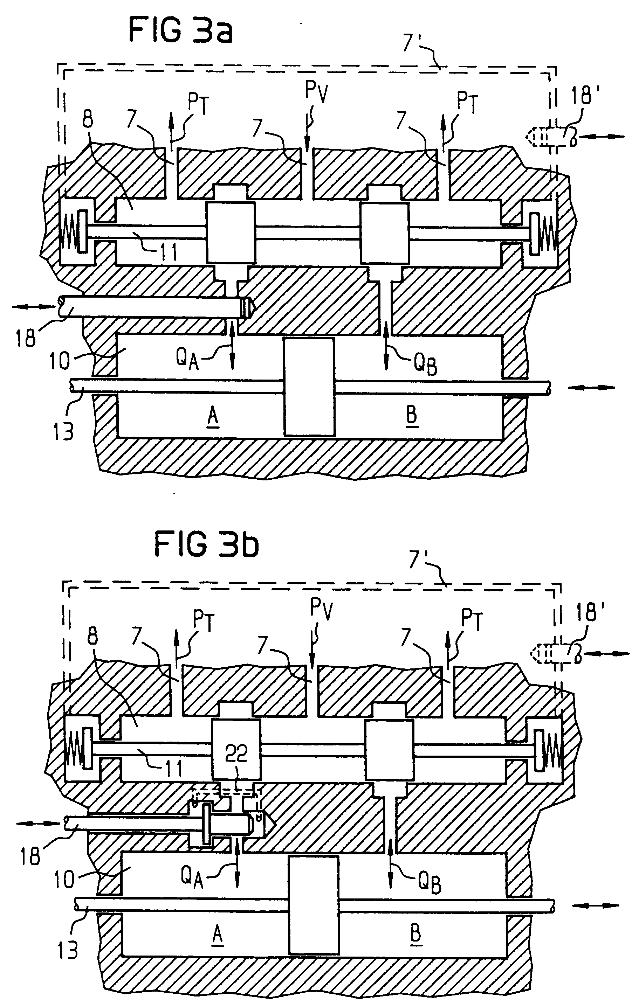

Das Unterbrechen des Hydraulikkreises 7 oder eines Hilfskreises 7' ist in der Figur 3a näher dargestellt. Beim Lenken strömt das Öl im Hydraulikkreis 7 und unterstützt somit den Fahrer. Wird der Hydraulikkreis 7 unterbrochen, so kann das Lenkrad nicht gedreht werden. Hierzu ist eine Sperreinrichtung vorgesehen, bei der ein Riegel 18 in den Hydraulikkreis 7 oder Riegel 18' in den Hilfskreis 7' geschoben wird, so daß der Ölfluß gestoppt wird.

Der Hilfskreis 7' erlaubt einen Ölausgleich zwischen den beiden Enden des Steuerkolbens 11. Da sich der Steuerkolben - entgegen der Rückstellkräfte durch Federn - auf eine Seite beim Lenken bewegt, muß sich das dort befindliche Öl über den Hilfskreis 7' zum anderen Ende bewegen. Wird dieser Hilfskreis 7' gesperrt, so ist die Lenkung ebenfalls nicht mehr möglich.

Die Unterbrechung des Hydraulikkreises 7, 7' kann mit minimalem Kraftaufwand durch elektromotorische, magnetische, pneumatische oder ähnlich gesteuerte Bewegung des Riegels 18, 18' oder auch durch eine elektrische Veränderung der Hydraulikflüssigkeit, d.h. der Viskosität, erreicht werden. Hierzu wird durch ein von außen angelegtes elektrisches/magnetisches Feld die Viskosität des Öls verändert, so daß das Öl nicht mehr fließen kann.

Das Unterbrechen des Hydraulikkreises 7 hat den Vorteil, daß in jeder Lenkstellung ein Sperren der Lenkung möglich ist.

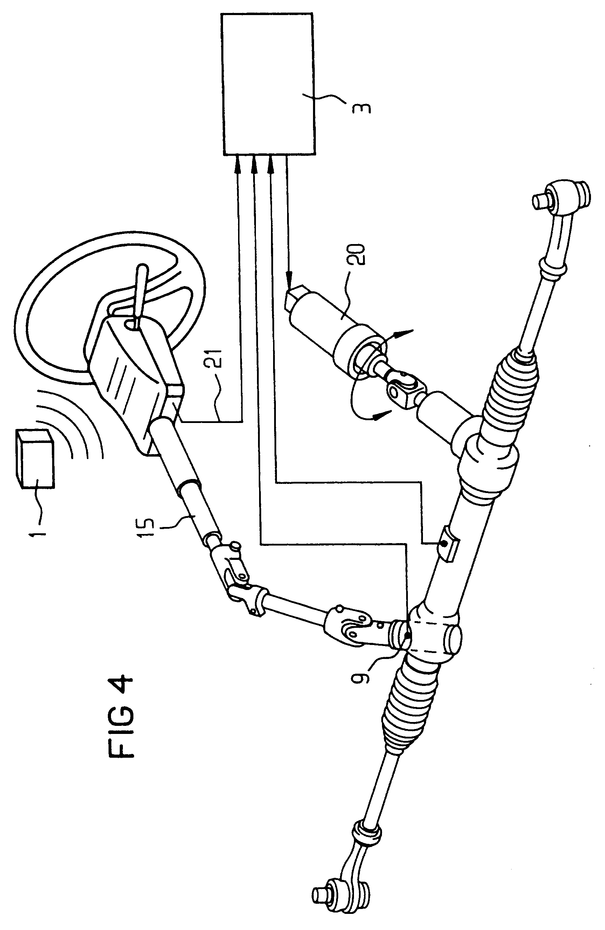

In der Figur 4 ist eine elektromotorische Servolenkung dargestellt. Das Steuergerät 3 erfaßt den gewünschten Drehwinkel des Lenkrades und setzt diesen Drehwinkel in einen Lenkwinkel für die Räder 4 über einen Elektromotor 20 um. Wenn noch kein Freigabesignal empfangen wurde, so ist der Elektromotor 20 über das Steuergerät 3 gesperrt. Sobald das Freigabesignal über eine Codeleitung 21 oder auch einen Bus empfangen wird, wird der Elektromotor 20 freigegeben und steuert dann die Räder 4 gemäß Anforderungen des Fahrers.

Die Sperreinrichtung kann gemäß Figur 3b so ausgebildet werden, daß erst ein vorhandener Hydraulikdruck den Riegel 18 aus der gesperrten Stellung in die offene Stellung schiebt. Der Riegel 18 kann aber auch bei vorhandenem Hydraulikdruck z.B. elektromechanisch schaltbar bleiben. Hierzu ist zusätzlich eine By-pass-Leitung 22 vorgesehen, mit deren Hilfe der Hydraulikkreis 7 entgegen des Hydraulikdrucks des Öls versperrt wird.

Bei einer hydraulischen oder pneumatischen Servolenkung kann auch die Pumpe 6 durch das Freigabesignal freigegeben werden.

Die Pumpe 6 kann aber auch solange in Gegenrichtung betrieben werden, wie noch kein Freigabesignal empfangen wurde. Durch den Hydraulikstrom in Gegenrichtung wird die Lenkung blockiert.

Wichtig ist, daß die Diebstahlschutzvorrichtung nur während des Stillstandes der Räder aktiviert wird. Denn während der Fahrt könnte es zu sicherheitskritischen Situationen kommen, wenn die Lenkung plötzlich nicht mehr funktioniert.

Bei einer erfindungsgemäßen Diebstahlschutzvorrichtung kann auch ein weiterer Elektromotor vorgesehen werden, der direkt auf die Lenksäule 15 einwirkt. Die Lenksäule 15 läßt sich dann im Ruhezustand nicht bewegen. Erst wenn das Freigabesignal empfangen wurde, wird die Lenksäule 15 zum Drehen freigegeben.

Der Codegeber 1 kann in Form eines Transponders auf einem Tür- oder Zündschlüssel angeordnet sein. Er kann aber auch als Fernbedlenung ausgebildet sein, die eine Taste und einen Sender aufweist, über den das Codesignal ausgesendet wird. Als Codegeber 1 kann auch eine Chipkarte dienen oder eine fest am Armaturenbrett installierte Tastatur , über die ein Code eingebbar ist.

Für die Erfindung ist es jedoch unwesentlich, wie der Codegeber 1 ausgebildet ist. Wesentlich ist nur, daß ein Codesignal ausgesendet wird, das im Kraftfahrzeug von einem Steuergerät empfangen und dort ausgewertet wird. Das Steuergerät überprüft also, ob das empfangene Codesignal mit dem Sollcodesignal übereinstimmt. Es findet eine sogenannte Authentifikation statt.

Bei dem Codesignal kann es sich um einen Festcode, d.h. ein ständig gleiches Codesignal wird gesendet, oder um ein Wechselcode oder Rollcode, d.h. das Codesignal wird nach jedem aussenden verändert, handeln. Das Codesignal und das Sollcodesignal kann durch einen vorgegebenen mathematischen Algorithmus jeweils neu berechnet werden. Es können auch kryptographische Verfahren Verwendung finden.

Das Steuergerät 3 im Kraftfahrzeug kann als separates Steuergerät ausgebildet sein, das das Freigabesignal an das Steuergerät der Servolenkung schickt. Das Steuergerät 3 kann aber auch in dem Steuergerät der Servolenkung integriert angeordnet sein.

Das Freigabesignal kann zusätzlich noch an andere Sicherheitsaggregate im Kraftfahrzeug, wie beispielsweise an die Motorsteuerung oder an die Zündeinrichtung ausgesendet werden. Damit wird der Diebstahlschutz weiter erhöht.

Das Codesignal kann vom Codegeber 1 zum Steuergerät 3 drahtlos (optisch, per Funkt oder induktiv) oder galvanisch über ein Leitung übertragen werden. Für die Erfindung ist jedoch die Übertragungsart unwesentlich.

Eine solche erfindungsgemäße Diebstahlschutzvorrichtung kann das mechanische Lenkradschloß ersetzen. Denn nur bei Empfang des richtigen Codesignals ist erfindungsgemäß ein Drehen des Lenkrades möglich.

## Patentansprüche

1. Diebstahlschutzvorrichtung für ein Kraftfahrzeug mit
- einem Codegeber (1), der auf Anforderung ein Codesignal aussendet,
- einem Steuergerät (3) im Kraftfahrzeug, das das Codesignal empfängt, mit einem Sollcodesignal vergleicht und bei Übereinstimmung ein Freigabesignal erzeugt, und mit
- einer Lenkeinrichtung (8, 10, 15) mit einer Servoeinrichtung (10,11,13,3,20), die ein Lenken der Fahrzeug-Räder (4) erst dann freigibt und danach den Fahrer beim Lenken unterstützt, wenn die Servoeinrichtung das Freigabesignal empfängt.

2. Diebstahlschutzvorrichtung nach Anspruch 1, dadurch gekennzeichnet, daß die Servoeinrichtung ein Betätigungsörgan (11, 13, 15, 20) aufweist, das durch eine Verriegelungseinrichtung (16) fixiert ist, wobei die Verriegelungseinrichtung infolge des Freigabesignals in eine Freigabestellung bewegt wird, so daß die Räder des Kraftfahrzeugs über das Betätigungsorgan gelenkt werden können.

3. Diebstahlschutzvorrichtung nach Anspruch 1,
**dadurch gekennzeichnet, daß**
die Verriegelungseinrichtung (16) hydraulisch, elektromotorisch, magnetisch oder pneumatisch von der Sperrstellung in die Freigabestellung bewegt wird.

4. Diebstahlschutzvorrichtung nach Anspruch 1,
**dadurch gekennzeichnet, daß**
das Betätigungsorgan hydraulisch betätigt wird.

5. Diebstahlschutzvorrichtung nach Anspruch 1,
**dadurch gekennzeichnet, daß**
das Betätigungsorgan pneumatisch oder elektrisch betätigt wird.

6. Diebstahlschutzvorrichtung nach Anspruch 4,
**dadurch gekennzeichnet, daß**
die Lenkeinrichtung eine Hydraulikpumpe (6) aufweist, die von dem Steuergerät (3) erst nach Empfang des Freigabesignals in Betrieb gesetzt wird.

7. Diebstahlschutzvorrichtung nach Anspruch 4,
**dadurch gekennzeichnet, daß**
eine Sperreinrichtung (18) im Hydraulikkreis vorhanden ist, die den Hydraulikkreis (7) unterbricht und die Hydraulikflüssigkeit erst nach Empfang des Freigabesignals frei fließen läßt.

8. Diebstahlschutzvorrichtung nach Anspruch 4,
**dadurch gekennzeichnet, daß**
die Hydraulikpumpe (6) die Hydraulikflüssigkeit solange in Gegenrichtung steuert, solange kein Freigabesignal empfangen wurde.

9. Diebstahlschutzvorrichtung nach Anspruch 5,
**dadurch gekennzeichnet, daß**
sie einen Elektromotor (20) aufweist, der das Betätigungsorgan erst dann steuert, wenn er das Freigabesignal empfängt.

## Claims

1. Anti-theft device for a motor vehicle, having
- a code signal transmitter (1) which emits a code signal on request,
- a control unit (3) in the motor vehicle, which control unit (3) receives the code signal, compares it with a reference code signal and, in the case of correspondence, generates a release signal, and having
- a steering device (8, 10, 15) having a power-steering device (10, 11, 13, 3, 20) which does not release the vehicle wheels (4) for steering and then assists the driver in steering unless the power-steering device receives the release signal.

2. Anti-theft device according to Claim 1, characterized in that the power-steering device has an actuation element (11, 13, 15, 20) which is secured by a locking device (16), the locking device being moved into a release position as a result of the release signal so that the wheels of the motor vehicle can be steered by means of the actuation element.

3. Anti-theft device according to Claim 1, characterized in that the locking device (16) is moved hydraulically, electromotively magnetically or pneumatically, from the blocked position into the release position.

4. Anti-theft device according to Claim 1, characterized in that the actuation element is actuated hydraulically.

5. Anti-theft device according to Claim 1, characterized in that the actuation element is actuated pneumatically or electrically.

6. Anti-theft device according to Claim 4, characterized in that the steering device has a hydraulic pump (6) which is not switched on by the control unit (3) until the release signal is received.

7. Anti-theft device according to Claim 4, characterized in that there is a blocking device (18) in the hydraulic circuit, which blocking device (18) interrupts the hydraulic circuit (7) and does not allow the hydraulic fluid to flow freely until the release signal is received.

8. Anti-theft device according to Claim 4, characterized in that the hydraulic pump (6) directs the hydraulic fluid in the opposing direction as long as a release signal has not been received.

9. Anti-theft device according to Claim 5, characterized in that it has an electric motor (20) which does not actuate the actuation element until the said electric motor (20) receives the release signal.

## Revendications

1. Dispositif antivol pour véhicule automobile, comprenant
- un générateur de code (1) qui émet un signal codé à la demande,
- un appareil de commande (3), situé dans le véhicule automobile, qui reçoit le signal codé, le compare à un signal codé de consigne et, en cas de coïncidence, produit un signal de libération et
- un dispositif de direction (8,10,15) ayant une direction assistée (10,11,13,3,20) qui ne libère un braquage des roues (4) du véhicule et assiste ensuite le conducteur au volant que lorsque la direction assistée reçoit le signal de libération.

2. Dispositif antivol selon la, revendication 1, caractérisé en ce que le dispositif de direction comprend un organe de manoeuvre (11, 13, 15, 20) qui est immobilisé au moyen d'un dispositif de verrouillage (16), le dispositif de verrouillage étant déplacé à une position de libération sous l'effet du signal de libération, de sorte que les roues du véhicule automobile peuvent être braquées au moyen de l'organe de manoeuvre.

3. Dispositif antivol selon la revendication 1, caractérisé en ce que le dispositif de verrouillage (16) est déplacé de la position de blocage à la position de libération par voie hydraulique, magnétique ou pneumatique ou au moyen d'un moteur électrique.

4. Dispositif antivol selon la revendication 1, caractérisé en ce que l'organe de manoeuvre est actionné par la voie hydraulique.

5. Dispositif antivol selon la revendication 1, caractérisé en ce que l'organe de manoeuvre est actionné par la voie pneumatique ou électrique.

6. Dispositif antivol selon la revendication 4, caractérisé en ce que le dispositif de direction conprend une pompe hydraulique (6) qui n'est mise en marche par l'appareil de commande (3) qu'après réception du signal de libération.

7. Dispositif antivol selon la revendication 4, caractérisé an ce que, dans le circuit hydraulique, il est prévu un dispositif de blocage (18) qui interrompt le circuit hydraulique (7) et ne laisse passer librement le liquide hydraulique qu'après réception du signal de libération.

8. Dispositif antivol selon la revendication 4, caractérisé an ce que la pompe hydraulique (6) commande le liquide hydraulique dans le sens opposé aussi longtemps qu'un signal de libération n'a pas été reçu.

9. Dispositif antivol selon la revendication 5, caractérisé en ce qu'il comprend un moteur électrique (20) qui ne commande l'organe de manoeuvre que lorsqu'il reçoit le signal de libération.
